# EUROPÄISCHE PATENTSCHRIFT

(11) **EP 1 561 675 B1**
(45) Veröffentlichungstag und Bekanntmachung des Hinweises auf die Patenterteilung: **09.06.2010**
(21) Anmeldenummer: 05002154.2
(22) Anmeldetag: 02.02.2005
(51) Int. Cl.: B62D 33/02, B62D 21/15

(54) **Ladeboden für ein Kraftfahrzeug und Kraftfahrzeug mit entsprechenden Ladeboden**
Loading platform for a transport vehicle and transport vehicle equipped therewith
Plateforme de chargement de camion et camion muni de cette plateforme

(30) Priorität: 04.02.2004 DE 102004005554
(43) Veröffentlichungstag der Anmeldung: 10.08.2005
(73) Patentinhaber: Deisböck, Ludwig, 85609 Aschheim (DE)
(72) Erfinder: Deisböck, Ludwig, 85609 Aschheim (DE)
(74) Vertreter: nospat Patent- und Rechtsanwälte Naefe Oberdorfer Schmidt

(56) Entgegenhaltungen:
- DE-A1- 2 449 968
- US-A- 3 519 301
- US-A- 5 909 920
- PATENT ABSTRACTS OF JAPAN Bd. 2003, Nr. 01, 14. Januar 2003 (2003-01-14) -& JP 2002 264838 A (ISUZU MOTORS LTD), 18. September 2002 (2002-09-18)

## Beschreibung

Die Erfindung betrifft einen Ladeboden nach dem Oberbegriff des Anspruchs 1 und ein Kraftfahrzeug nach dem Oberbegriff des Anspruchs 27.

Aus dem Stand der Technik sind als Transportfahrzeuge, insbesondere als Kleintransportfahrzeuge, Kastenwägen mit einem geschlossenen Aufbau und einer Ladekapazität von beispielsweise 1 bis 1,5 t bekannt. Weiterhin sind aus dem Stand der Technik Kleinlastkraftwägen bekannt, welche ein Führerhaus aufweisen, welches heckseitig durch eine Rückwand begrenzt ist. In Fahrtrichtung hinter der Rückwand schließt sich über die restliche Fahrzeuglänge eine Pritschenladefläche an. Diese Pritscheladefläche kann ggf. mit Ladebordwänden versehen sein. Weiterhin ist es aus dem Stand der Technik bekannt, beabstandet unterhalb der Pritschenladefläche einen Fahrzeugboden anzuordnen, so dass zwischen der Pritschenladefläche und dem Fahrzeugboden ein Laderaum gebildet ist, welcher umfänglich, d.h. an den Fahrzeuglängsseiten und an der hinteren Fahrzeugquerseite mittels Seitenwandungen bzw. einer Abschlusswandung, welche Türen oder Klappen aufweisen, verschlossen ist, so dass ein abschließbarer Laderaum zwischen dem Fahrzeugboden und der Pritschenladefläche entsteht. Moderne Kleinlastkraftwagen werden jedoch durchwegs in der Ausführung als Pritschenwägen derart ausgebildet, dass unterhalb der Pritschenladefläche kein abschließbarer Ladehohlraum mehr.vorhanden ist, sondern die Pritschenladefläche im Wesentlichen auf einem Leiterrahmen nach Lastkraftwagenbauart angeordnet ist. Bei dieser Bauart des Pritschenlastkraftwagens ist von Nachteil, dass der abschließbare Ladehohlraum unter der Pritschenladefläche verloren geht. Somit besteht ein Bedürfnis, bestehende Kleinlastkraftwägen, insbesondere Kastenwägen dahingehend umzubauen, dass eine Pritschenladefläche und ein darunter liegender, abschließbarer Hohlraum bzw. Laderaum vorhanden ist.

Aus der gattungsgemäßen JP 2002 264838 A ist ein Kleinlastkraftwagen bekannt, bei dem ein Ladeboden mittels Deformationseinrichtungen mit Längsträgern eines Fahrzeugrahmens verbunden ist.

Aus der US 5,909,920 ist eine Verankerungseinrichtung für ein Rahmenbauteil auf einem anderen Rahmenbauteil eines Kraftfahrzeugs bekannt, wobei die Verankerungseinrichtungen als deformierbares Winkelelement ausgebildet sind.

Aus der DE 24 49 968 ist ein Sattelzug mit einem, an einer Sattelzugmaschine angebrachten Sattelanhänger bekannt. Es wird ein Energieabsorbtionssystem vorgeschlagen, welches nach einem Überschreiten einer bestimmten Aufprallkraft aktiviert wird. Es wird vorgeschlagen, eine definierte Relativbewegung zwischen einem Sattelzugaufleger und der Sattelzugzugmaschine in definiertem Maße zuzulassen.

Aufgabe der Erfindung ist es, einen Ladeboden für ein Kraftfahrzeug anzugeben, welcher es als Nachrüstladeboden ermöglicht, einen Lastkraftwagen mit einer Ladepritsche und einem abschließbaren Ladehohlraum unter der Ladepritsche auszubilden. Weiterhin soll der Ladeboden die Tragstruktur, insbeson dere das Crashverhalten und das Knautschverhalten des umgebauten Fahrzeugs unverändert lassen und/oder verbessern.

Diese Aufgabe wird mit einem Ladeboden für ein Kraftfahrzeug mit den Merkmalen des Anspruchs 1 und einem Kraftfahrzeug aufweisend den Ladeboden mit den Merkmalen des Anspruchs 26 gelöst.

Im Folgenden wird die Erfindung anhand der Zeichnung beispielhaft näher erläutert. Es zeigen:
- Figur 1:: einen erfindungsgemäßen Ladeboden in einer Draufsicht;
- Figur 2:: den erfindungsgemäßen Ladeboden gemäß Figur 1, eingebaut in einem Klein-Lkw im Längsschnitt durch die Fahrzeugmittelebene entlang der Linie A-A in Figur 1;
- Figur 3:: den erfindungsgemäßen Ladeboden gemäß Figur 1 eingebaut in einem Klein-LKW im Querschnitt entlang der Linie B-B;
- Figur 4:: eine perspektivische Detailheckansicht auf ein erfindungsgemäßes Fahrzeug aufweisend den Ladeboden gemäß Figur 1;

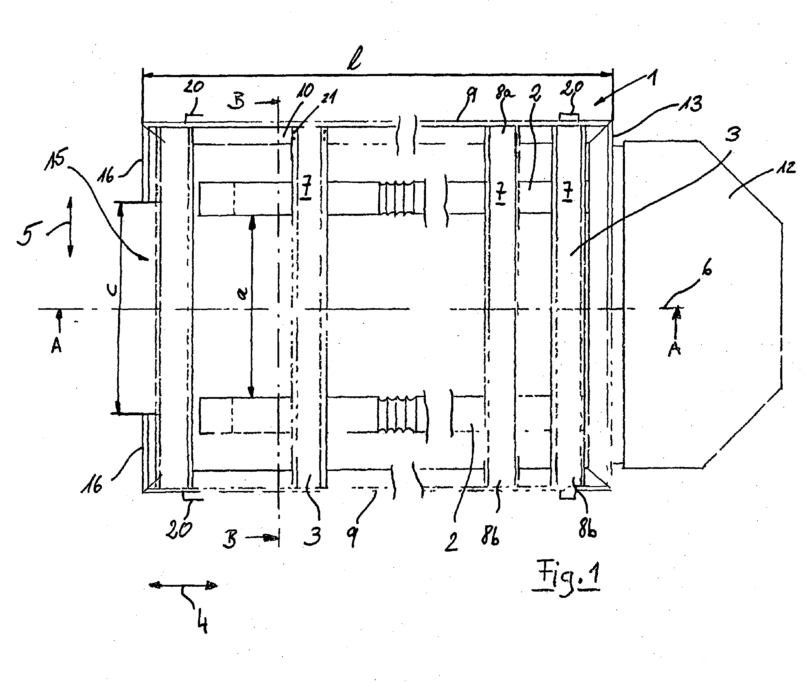

Ein erfindungsgemäßer Ladeboden 1 (Figur 1) weist zumindest einen Längsträger 2 sowie zumindest einen, bevorzugt eine Vielzahl von Querträgern 3 auf. Die Längsträger sind entlang einer Fahrzeuglängsrichtung 4, insbesondere parallel zur Fahrzeuglängsrichtung 4 angeordnet und weisen einen rechteckkastenförmigen Querschnitt auf. Die Querträger 3 schließen mit den Längsträgern 2 einen rechten Winkel ein und verlaufen in einer Fahrzeugquerrichtung 5. Die Längsträger 2 sind symmetrisch zu einer Fahrzeugmittellängsebene 6 angeordnet und weisen zueinander bevorzugt einen Abstand a auf, welcher in etwa 2/3 der Ladebodenbreite b beträgt. Über eine Ladebodenlänge 1 ist eine Vielzahl von Querträgern 3 gleichmäßig beabstandet zueinander angeordnet. Die Querträger 3 weisen eine Querträgeroberseite 7 auf, welche zueinander in einer Ebene liegen, so dass eine Ladebodenebene gebildet wird. Die Querträger 3 haben einendig freie Enden 8a und anderendig freie Enden 8b, welche jeweils zueinander in Fahrzeuglängsrichtung 4 fluchten. Die Querträger 3 sind mit ihren freien Enden 8a bzw. 8b mit einer Ladebodenrahmenleiste 9 verbunden, welche im Querschnitt 1-förmig mit einem horizontal verlaufenden Schenkel 10 und einem vertikal ausgerichteten Schenkel 11 ausgebildet sind. Am frontseitigen Ende des Ladebodens 1, bevorzugt direkt benachbart hinter einem Führerhaus 12 sind die Ladebodenrahmenleisten 9 endseitig mit einer Ladebodenquerrahmenleiste 13 verbunden, welche im Querschnitt identisch wie die Ladebodenrahmenleisten 9 ausgebildet ist. Am in Fahrtrichtung 4 hinteren Ende 15 des Ladebodens 1 sind Ladebodenabschlussleisten 16 angeordnet, welche ebenfalls im Querschnitt 1-förmig ausgebildet sind. Die Ladebodenabschlussleisten 16 weisen freie Enden auf, welche zueinander einen Abstand c aufweisen. Das Maß c entspricht in etwa dem Abstand der fahrzeuginnenseitigen Kanten der Heckleuchten des umzubauenden Kraftfahrzeugs.

Außenseitig an den Rahmenleisten 9, 16 sind ggf. Schaniereinrichtungen 20 angeordnet, welcher zur gelenkigen Lagerung von Ladebordwänden (nicht gezeigt) dienen.

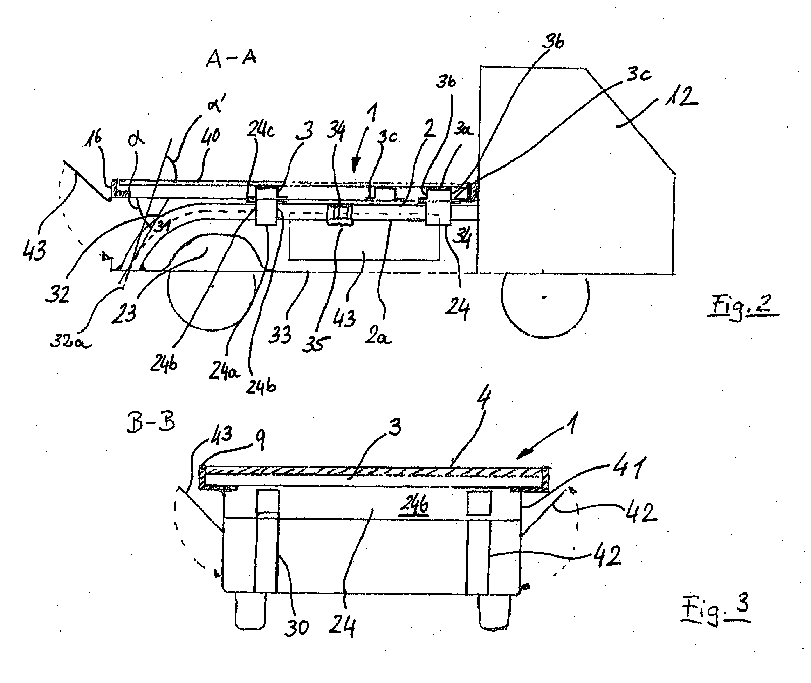

Die Querträger 3 (vgl. Figur 2 und 3) sind im Querschnitt im Wesentlichen u-förmig, nach unten offen ausgebildet mit einer oberseitig die Ladebodenebene 7 bildenden Basiswandung 3a und Seitenwandungen 3b. Von den freien Enden der Seitenwandungen 3b erstrecken sich Befestigungsflansche 3c weg, mittels denen die Querträger 3 auf dem ersten Schenkel 10 der Ladebodenrahmenleisten 9 beispielsweise mittels einer Punktschweißung 21 befestigt sind. Bevorzugt im Bereich direkt hinter dem Führerhaus 12 und im Bereich etwas vor dem hinteren Radhaus 23 weist der Ladeboden 1 von unten gegen ausgewählte Querträger 3 gesetzte Quertraversen 24 auf, welche im Bedarfsfall mittels vertikalen Stützelementen 42 gegen den Fahrzeugboden 33 abgestützt sind. Die Querträger 3 sind in einer anderen Ausführungsform zweckmäßigerweise im Querschnitt trapezförmig ausgebildet.

Die Quertraversen 24 sind ebenfalls im Querschnitt u-förmig oder trapezförmig, aber nach oben offen ausgebildet und weisen eine Basiswandung 24a sowie Traversenseitenwandungen 24b auf. Von den freien Kanten der Traversenseitenwandungen 24b erstrecken sich Flansche 24c weg. Diese Flansche 24c sind mit korrespondierenden Flanschen 3c eines Querträgers 3 mittels einer Schweißung 26, beispielsweise einer Punktschweißung bevorzugt über die gesamte Länge des korrespondierenden Querträgers 3 verbunden.

Gemäß einer weiteren Ausführungsform der Erfindung sind die Quertraversen 24 mit vertikalen Trägerholmen des umzubauenden Fahrzeugs verbunden.

Gemäß einer weiteren Ausführungsform der Erfindung sind die Quertraversen 24 in einem Zwischenraum zwischen zwei Querträgern 3 angeordnet und/oder zweckmäßigerweise als geschlossener Kastenträger ausgebildet. Dies bewirkt eine verbesserte Flächenlastverteilung des Ladeguts.

Von der in Fahrtrichtung 4 hinteren Quertraverse 24 erstreckt sich fluchtend zum Längsträger 2 eine Deformationseinrichtung 30. Die Deformationseinrichtung 30 ist wie der Längsträger 2 im Querschnitt kastenförmig, insbesondere rechteckkastenförmig mit vertikal ausgerichteten Hochseitenwandungen 31 und Querseitenwandungen 32 ausgebildet.

Besonders bevorzugt schließt das Deformationselement 30 bzw. oder eine Wirkachse 32a des Deformationselements 30 mit der Ladebodenebene einen Winkel α ein. Der Winkel α ist am freien Ende des Deformationselements 30, welches im eingebauten Zustand des Ladebodens 1 mit dem Fahrzeugboden 33 verbunden ist, bevorzugt kleiner als 90° (Winkel α'), insbesondere liegt der Winkel zwischen 45° und 90°.

Wenn der Winkel α ein spitzer Winkel ist, wirken die zum Ladeboden 1 hingewandten Querseitenwandungen 32 als Auffahrrampe für ein heckseitig aufprallendes Fahrzeug. Im Falle des Heckaufpralls wird somit das Deformationselement 30 unter Verformung in Richtung zum Fahrzeugboden 33 gedrückt. Weiterhin wird der Ladeboden 1 hierdurch in Richtung zum Fahrzeugboden abgesenkt. Das aufprallende Fahrzeug wird somit zwischen den Querträgern 3 und dem Deformationselementen 30 eingequetscht, so dass hierdurch Aufprallenergie abgebaut wird.

Weiterhin wird das aufprallende Fahrzeug ein Stück vertikal angehoben, so dass die Ladebodenebene relativ zum aufprallenden Fahrzeug nach unten bewegt wird. Somit wird verhindert, dass die Ladebodenhinterkante in die Windschutzscheibe des aufprallenden Fahrzeugs eindringen kann.

Der Ladeboden 1 weist zum Fahrzeugboden 33, z.B. gemessen von einer Unterseite 2a des Längsträgers 2 den Abstand l₂ auf, so dass zwischen dem Ladeboden 1 und dem Fahrzeugboden 33 als Laderaum ein Hohlraum 34 gebildet ist. Die Deformationseinrichtung 30 ist von der hinteren Quertraverse 24 aus in Fahrzeuglängsrichtung 4 nach hinten orientiert und verläuft bogenförmig die Länge l₂ überbrückend nach unten zum Fahrzeugboden 33 und ist am freien Ende der Deformationseinrichtung 30 mit dem Fahrzeugboden 33 verbunden, insbesondere verschweißt oder verklebt. Die bogenförmige Ausgestaltung der Deformationseinrichtung 30 bzw. des Deformationsträgers stellt sicher, dass bei einem Auffahrunfall von hinten auf das Fahrzeug das bogenförmige Deformationselement 30 relativ leicht biegbar verformbar ist, d.h. nicht starr ist, so dass durch die Deformation definiert Aufprallenergie aufnehmbar ist und somit eine Knautschzone im Heckbereich des mit dem Ladeboden 1 ausgerüsteten Kraftfahrzeugs ausgebildet ist. Somit ist sichergestellt, dass das Verformungs- bzw. Deformationsverhalten des Fahrzeuges, welches mit dem erfindungsgemäßen Ladeboden 1 ausgerüstet ist, beim Heckaufprall etwa dem Verformungsverhalten des serienmäßigen, d.h. geschlossenen Kastenwagens, der als Ausgangsfahrzeug für den Umbau dient, entspricht.

Zur weiteren Verbesserung der Deformationseigenschaften der Längsträger 2 des Ladebodens 1 können beispielsweise im Bereich zwischen den Quertraversen 24 die Längsträger Sicken 34 bzw. Sicken-Abschnitte 35 aufweisen, so dass die Längsträger 2 auch im Bereich zwischen den Quertraversen 24 bei einem Heckaufprall durch definierte Verformung Energie aufnehmen können. Die Sickenpakete bzw. Sicken- Abschnitte 35 sind bevorzugt jeweils in einem Zwischenraum zwischen zwei Querträgern 7 angeordnet.

Weiterhin ist es vorteilhaft, im Bogenbereich des Deformationselements 30 Sicken 36 strahlerförmig anzuordnen, so dass die Deformation des kastenförmigen Deformationselements 30 in vorherbestimmbarer Art und Weise erfolgt. Die Sicken 36 sind bevorzugt in die Hochseitenwandungen 31 eingeformt.

Auf den freien Oberseiten 7 der Querträger 3 ist zur Bildung eines geschlossenen Ladebodens eine Ladebodenplatte 4 innerhalb der Ladebodenrahmenleisten 9, 13, 16 angeordnet, so dass eine geschlossene Ladefläche ausgebildet ist.

In vertikaler Richtung ist der Ladeboden 1 mittels der Seitenwandungen 41 des umzubauenden Kastenwagens abgestützt (Figur 3). Ggf. sind je nach Gewichtsbelastung der Pritschenfläche vertikale Stützenelemente 42 vorgesehen, welche den Ladeboden 1 gegen den Fahrzeugboden 33 abstützen. In den Fahrzeugseitenwandungen 41 sind ggf. an den Fahrzeuglängsseiten und besonders bevorzugt auch im Bereich des Fahrzeughecks Klappen und/oder Türen 43 angeordnet, welche einen Zugang zum Laderaum 34 ermöglichen. Bevorzugt sind diese Klappen bzw. Türen 43 absperrbar.

Gemäß einer weiteren Ausführungsform sind anstelle oder zusätzlich zu den Türen 43 Schubladenelemente vorgesehen, welche in geeigneten Schienen verschiebbar gelagert sind, derart, dass sie von einer eingeschobenen Stellung im Laderaum 34 in eine herausgezogene Stellung verschoben werden können. Derartige Schubladen haben den besonderen Vorteil, dass der gegebene Laderaum für insbesondere Kleinteile oder kleines Werkzeug geeignet ist. Im eingeschobenen Zustand schließen die Schubladen (nicht gezeigt) vorzugsweise mit den Seitenwandungen 41 oder ggf. mit einer Laderaumwandung im Bereich des Fahrzeughecks bündig ab.

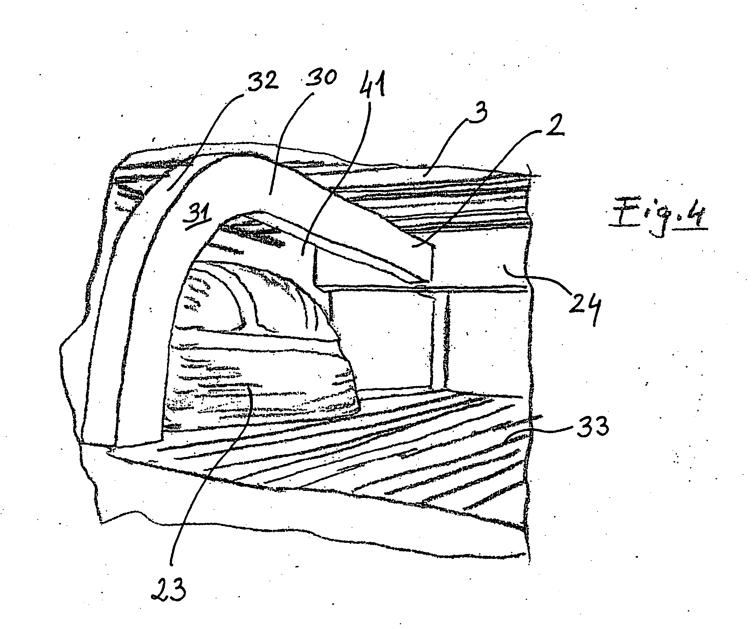

Figur 4 ist eine perspektivische Detailansicht in den Laderaum 34 durch die Heckklappe eines erfindungsgemäßen Kraftfahrzeugs. Die Deformationseinrichtung 30 ist als Biegedeformationseinrichtung ausgebildet und nimmt im Falle eines Heckaufpralles durch Verformung des Bogensegmentes Aufprallenergie auf. Weiterhin wirkt das Deformationselement 30 im Heckbereich des Ladebodens als vertikale Stütze während des Betriebs.

Der erfindungsgemäße Ladeboden hat den besonderen Vorteil, dass in einfacher Art und Weise ein aus dem gängigen Lieferprogramm von Kleinlastkraftwagenherstellern verfügbarer Kastenwagen zu einem Kleinlastkraftwagen mit einer Pritschenladefläche und einem abschließbaren, darunter liegenden Stauraum umrüstbar ist, ohne dass die Deformationseigenschaften des Fahrzeugs beim Heckaufprall negativ beeinflusst werden. Außerdem stellt die deformierbare Konstruktion der Längsträger sicher, dass bei einem starken Heckaufprall der Längsträger nicht in das Führerhaus spießartig eindringen kann, sondern dass dieser unter definierter Verformung die Aufprallenergie abbauen kann.

## Patentansprüche

1. Ladeboden für ein Fahrzeug, insbesondere für einen Kleinlastkraftwagen, welcher zumindest einen Längsträger (2) und zumindest einen eine Ladenbodenebene bildenden Querträger (2) aufweist, wobei der Querträger (3) mit dem Längsträger (2) verbunden ist, wobei der Ladeboden (1) eine Kopplungseinrichtung zwischen dem Ladeboden (1) und einer Tragstruktur (33) des Fahrzeuges aufweist und die Kopplungseinrichtung als Deformationseinrichtung (30) ausgebildet ist, **dadurch gekennzeichnet, dass** die Deformationseinrichtung (30) ein bogenförmiges Kastenrohrsegment ist.

2. Ladeboden nach Anspruch 1, **dadurch gekennzeichnet, dass** die Deformationseinrichtung (30) sich auf einem Fahrzeugboden (33) abstützend eine vertikale Stützeinrichtung für den Ladeboden (1) ist.

3. Ladeboden nach Anspruch 1 oder 2, **dadurch gekennzeichnet, dass** eine Deformationseinrichtung (30) an ihrem freien Ende mit der Ladebodenebene einen spitzen Winkel α' einschließt.

4. Ladeboden nach Anspruch 3, **dadurch gekennzeichnet, dass** der Winkel α' zwischen 45° und 90° liegt.

5. Ladeboden nach Anspruch 3, **dadurch gekennzeichnet, dass** der Winkel α' zwischen 60° und 90° liegt.

6. Ladeboden nach einem oder mehreren der vorangegangen Ansprüche, **dadurch gekennzeichnet, dass** der Längsträger (2) Deformationseinrichtungen (34, 35) zur definierten Verformung bei einem Aufprall aufweist.

7. Ladeboden nach einem oder mehreren der vorangegangen Ansprüche, **dadurch gekennzeichnet, dass** die Deformationseinrichtungen Sicken (34) oder Sickenpakete (35) sind.

8. Ladeboden nach einem oder mehreren der vorangegangen Ansprüche, **dadurch gekennzeichnet, dass** die Längsträger (2) entlang einer Fahrzeuglängsrichtung (4) angeordnet sind und die Querträger (3) mit den Längsträgern (2) einen rechten Winkel einschließen und in einer Fahrzeugquerrichtung (5) verlaufen.

9. Ladeboden nach einem oder mehreren der vorangegangen Ansprüche, **dadurch gekennzeichnet, dass** die Längsträger (2) symmetrisch zu einer Fahrzeugmittellängsebene (6) angeordnet sind.

10. Ladeboden nach einem oder mehreren der vorangegangen Ansprüche, **dadurch gekennzeichnet, dass** die Querträger (3) eine Querträgeroberseite (7) aufweisen, welche eine Ladebodenebene bilden.

11. Ladeboden nach einem oder mehreren der vorangegangen Ansprüche, **dadurch gekennzeichnet, dass** die Querträger (3) endseitig mit einer Ladebodenrahmenleiste (9) verbunden sind, welche im Querschnitt im Wesentlichen 1-förmig ist.

12. Ladeboden nach einem oder mehreren der vorangegangen Ansprüche, **dadurch gekennzeichnet, dass** die Querträger (39 im Querschnitt u-förmig, nach unten offen ausgebildet sind und eine Basiswandung (3a) und Seitenwandungen (3b) aufweisen, von denen sich Befestigungsflansche (3c) wegerstrecken.

13. Ladeboden nach einem oder mehreren der vorangegangen Ansprüche, **dadurch gekennzeichnet, dass** im Bereich direkt hinter einem Führerhaus (12) und im Bereich etwas vor dem hinteren Radhaus der Ladeboden (1) Quertraversen (24) aufweist.

14. Ladeboden nach einem oder mehreren der vorangegangen Ansprüche, **dadurch gekennzeichnet, dass** die Quertraversen (24) im Querschnitt nach oben offen u-förmig ausgebildet sind und eine Basiswandung (24a) sowie Traversenseitenwandungen (24b) aufweisen.

15. Ladeboden nach einem oder mehreren der vorangegangen Ansprüche, **dadurch gekennzeichnet, dass** von freien Kanten der Traversenseitenwandungen (24b) sind Flansche (24c) wegerstrecken, welche mit korrespondierenden Flanschen (3c) eine Querträgers (3) verbunden sind.

16. Ladeboden nach einem oder mehreren der vorangegangen Ansprüche, **dadurch gekennzeichnet, dass** die Deformationseinrichtung (30) sich von der in Fahrtrichtung (4) hinteren Quertraverse (24) fluchtend zum Längsträger (2) erstreckt.

17. Ladeboden nach einem oder mehreren der vorangegangen Ansprüche, **dadurch gekennzeichnet, dass** die Deformationseinrichtung (30) im Querschnitt rechteckkastenförmig mit vertikalen Hochseitenwandungen (31) und Querseitenwandungen (32) ausgebildet ist.

18. Ladeboden nach einem oder mehreren der vorangegangen Ansprüche, **dadurch gekennzeichnet, dass** die Deformationseinrichtung ein Bogensegment aufweist, welches im Bereich der Hochseitenwandungen (31) Sicken aufweist.

19. Ladeboden nach einem oder mehreren der vorangegangen Ansprüche, **dadurch gekennzeichnet, dass** der Längsträger (2) des Ladebodens (1) im Bereich zwischen Quertraversen (24) Sicken (34) bzw. Sickenabschnitte (35) aufweisen.

20. Ladeboden nach einem oder mehreren der vorangegangen Ansprüche, **dadurch gekennzeichnet, dass** die Sickenabschnitte (35) in einem Zwischenraum zwischen zwei Querträgern (7) angeordnet sind.

21. Ladeboden nach einem oder mehreren der vorangegangen Ansprüche, **dadurch gekennzeichnet, dass** auf den freien Oberseiten (7) der Querträger (3) eine Ladenbodenplatte (40) angeordnet ist, welche lösbar trennbar mit dem Ladeboden (1) verbunden ist.

22. Ladeboden nach einem oder mehreren der vorangegangen Ansprüche, **dadurch gekennzeichnet, dass** der Ladeboden (1) in vertikaler Richtung auf Seitenwandungen (41) des Kraftfahrzeugs abgestützt ist.

23. Ladeboden nach einem oder mehreren der vorangegangen Ansprüche, **dadurch gekennzeichnet, dass** zur vertikalen Abstützung des Ladebodens (1) Stützenelemente (42) vorhanden sind, welche den Ladeboden (1) gegen den Fahrzeugboden (33) abstützen.

24. Ladeboden nach einem oder mehreren der vorangegangen Ansprüche, **dadurch gekennzeichnet, dass** im Bereich der Fahrzeuglängsseiten und/oder im Bereich des Fahrzeugshecks Klappen und/oder Türen (43) angeordnet sind, welche einen Zugang zum Laderaum (34) ermöglichen.

25. Ladeboden nach einem oder mehreren der vorangegangen Ansprüche, **dadurch gekennzeichnet, dass** die Klappen und/oder Türen (43) absperrbar ausgebildet sind.

26. Kraftfahrzeug, insbesondere Kleinlastkraftwagen aufweisend den Ladeboden (1) nach einem oder mehreren der Ansprüche 1 bis 25.

27. Kraftfahrzeug nach Anspruch 26, **dadurch gekennzeichnet, dass** das Kraftfahrzeug unterhalb des Ladebodens (1) einen Laderaum (34) aufweist.

28. Kraftfahrzeug nach Anspruch 26 und/oder 27, **dadurch gekennzeichnet, dass** der Laderaum (34) mittels Türen und/oder Klappen (43) abschließbar zugänglich ist.

29. Kraftfahrzeug nach einem der Ansprüche 26 bis 28, **dadurch gekennzeichnet, dass** Schubladeneinrichtungen vorhanden sind, welche im Laderaum (24) angeordnet sind und aus diesem herausziehbar gelagert sind.

## Claims

1. Loading platform for a motor vehicle, in particular for a small freight vehicle which has at least one longitudinal chassis beam (2) and at least one crossmember (2) which form a loading platform plane, wherein said crossmember (3) is joined to the longitudinal chassis beam (2), wherein said loading platform (1) exhibits a coupling device between the loading platform (1) and a support structure (33) of the motor vehicle and wherein said coupling device is designed as a deformation mechanism (30), **characterised in that** said deformation mechanism (30) is an arch-shaped box-type pipe segment.

2. Loading platform as claimed in claim 1, **characterised in that** the deformation mechanism (30), supported by the vehicle floor (33), is a vertical support structure for the loading platform (1).

3. Loading platform as claimed in claim 1 or 2, **characterised in that** a deformation mechanism (30) at its free ends forms an acute angle α' with respect to the loading platform plane.

4. Loading platform as claimed in claim 3, **characterised in that** the angle α' is between 45° and 90°.

5. Loading platform as claimed in claim 3, **characterised in that** the angle α' is between 60° and 90°.

6. Loading platform as claimed in any one or more of the preceding claims, **characterised in that** the longitudinal chassis beam (2) exhibits deformation mechanisms (34, 35) to produce a defined deformation in the event of a collision.

7. Loading platform as claimed in any one or more of the preceding claims, **characterised in that** the deformation mechanisms are beads (34) or bead packages (35).

8. Loading platform as claimed in any one or more of the preceding claims, **characterised in that** the longitudinal chassis beams (2) are arranged along the lengthwise direction of the motor vehicle (4) and the crossmembers (3) form a right angle with the longitudinal chassis beams (2) and run in the transverse direction of the motor vehicle (5).

9. Loading platform as claimed in any one or more of the preceding claims, **characterised in that** the longitudinal chassis beams (2) are arranged symmetrically to the centre longitudinal plane of the motor vehicle (6).

10. Loading platform as claimed in any one or more of the preceding claims, **characterised in that** the crossmembers (3) exhibit a crossmember upper surface (7) which forms a loading platform surface.

11. Loading platform as claimed in any one or more of the preceding claims, **characterised in that** the cross members (3) are connected at their ends to a loading platform frame bar (9) whose cross-section is essentially 1-shaped.

12. Loading platform as claimed in any one or more of the preceding claims, **characterised in that** the crossmembers (39 are u-shaped in cross-section, are open towards the bottom, and have a base wall (3a) and side wall (3b) away from which mounting flanges (3c) extend.

13. Loading platform as claimed in any one or more of the preceding claims, **characterised in that** in the area directly behind the driver's cab (12) and in the area just in front of the rear wheelhouse the loading platform (1) has traverse members (24).

14. Loading platform as claimed in any one or more of the preceding claims, **characterised in that** in cross-section the traverse members (24) are open towards the top and u-shaped, and have a base wall (24a) and traverse side walls (24b).

15. Loading platform as claimed in any one or more of the preceding claims, **characterised in that** flanges (24c) extend from the free edges of the traverse side walls (24b) and that said flanges are connected to the corresponding flanges (3c) of a crossmember (3).

16. Loading platform as claimed in any one or more of the preceding claims, **characterised in that** the deformation mechanism (30) stretches from the rear traverse member (24), viewed with respect to the direction of travel (4), in alignment with the longitudinal chassis beam (2).

17. Loading platform as claimed in any one or more of the preceding claims, **characterised in that** the deformation mechanism (30) is designed in cross-section in the shape of a square box with vertical high side walls (31) and traverse side walls (32).

18. Loading platform as claimed in any one or more of the preceding claims, **characterised in that** the deformation mechanism has an arc-shaped segment which exhibits beads in the area of the high side walls (31).

19. Loading platform as claimed in any one or more of the preceding claims, **characterised in that** the longitudinal chassis beam (2) of the loading platform (1) exhibits beads (34) and/or bead sections (35) in the area between the traverse members (24).

20. Loading platform as claimed in any one or more of the preceding claims, **characterised in that** the bead sections (35) are arranged in a space between two crossmembers(7).

21. Loading platform as claimed in any one or more of the preceding claims, **characterised in that** a loading platform plate (40) is arranged on the free upper surfaces (7) of the crossmembers (3) which is connected to the loading platform (1) in such a way that it can be disconnected and detached.

22. Loading platform as claimed in any one or more of the preceding claims, **characterised in that** the loading platform (1) is supported, in the vertical direction, by the side walls (41) of the motor vehicle.

23. Loading platform as claimed in any one or more of the preceding claims, **characterised in that** there are support elements (42) for the vertical support of the loading platform (1) and which support the loading platform (1) against the vehicle floor (33).

24. Loading platform as claimed in any one or more of the preceding claims, **characterised in that** there are flaps and/or doors (43) in the area of the long sides of the vehicle and/or in the area of the rear of the vehicle which provide access to the cargo space (34).

25. Loading platform as claimed in any one or more of the preceding claims, **characterised in that** said flaps and/or doors (43) can be locked.

26. Motor vehicle, in particular small freight vehicle, featuring the loading platform (1) as claimed in any one or more of claims 1 to 25.

27. Motor vehicle as claimed in claim 26, **characterised in that** the motor vehicle has a cargo space (34) underneath the loading platform (1).

28. Motor vehicle as claimed in claim 26 and/or 27, **characterised in that** the cargo space (34) is accessible, and can also be locked, by means of doors and/or flaps (43).

29. Motor vehicle as claimed in claim 26 to 27, **characterised in that** there are compartments which are positioned in the cargo space (34) and arranged in such a way that they can be pulled out of said cargo space.

## Revendications

1. Plateforme de chargement pour un véhicule, en particulier pour un petit camion, qui présente au moins un longeron (2) et au moins une barre transversale (2) formant un plan de plateforme de chargement, la barre transversale (3) étant reliée au longeron (2), la plateforme de chargement (1) présentant un dispositif de couplage entre la plateforme de chargement (1) et une structure portante (33) du véhicule, et le dispositif de couplage étant réalisé sous forme de dispositif de déformation (30), **caractérisée en ce que** le dispositif de déformation (30) est un segment tubulaire de caisson en forme d'arc.

2. Plateforme de chargement selon la revendication 1, **caractérisée en ce que** le dispositif de déformation (30), en prenant appui sur un plancher de véhicule (33), est un dispositif de soutien vertical pour la plateforme de chargement (1).

3. Plateforme de chargement selon la revendication 1 ou 2, **caractérisée en ce qu'**un dispositif de déformation (30) forme à son extrémité libre un angle aigu α' avec le plan de la plateforme de chargement.

4. Plateforme de chargement selon la revendication 3, **caractérisée en ce que** l'angle α' est entre 45° et 90°,

5. Plateforme de chargement selon la revendication 3, **caractérisée en ce que** l'angle α' est entre 60° et 90°.

6. Plateforme de chargement selon l'une ou plusieurs des revendications précédentes, **caractérisée en ce que** le longeron (2) présente des dispositifs de déformation (34, 35) pour effectuer une déformation définie lors d'un impact.

7. Plateforme de chargement selon l'une ou plusieurs des revendications précédentes, **caractérisée en ce que** les dispositifs de déformation sont des moulures (34) ou des paquets de moulures (35).

8. Plateforme de chargement selon l'une ou plusieurs des revendications précédentes, **caractérisée en ce que** les longerons (2) sont agencés le long d'une direction longitudinale (4) de véhicule et les barres transversales (3) forment un angle droit avec les longerons (2) et s'étendent dans une direction transversale (5) du véhicule.

9. Plateforme de chargement selon l'une ou plusieurs des revendications précédentes, **caractérisée en ce que** les longerons (2) sont agencés symétriquement à un plan longitudinal médian (6) du véhicule.

10. Plateforme de chargement selon l'une ou plusieurs des revendications précédentes, **caractérisée en ce que** les barres transversales (3) présentent une surface supérieure (7) de barre transversale qui forme un plan de plateforme de chargement.

11. Plateforme de chargement selon l'une ou plusieurs des revendications précédentes, **caractérisée en ce que** les barres transversales (3) sont reliées aux extrémités avec une baguette de cadre de plateforme (9) qui est sensiblement en forme de 1 en section transversale.

12. Plateforme de chargement selon l'une ou plusieurs des revendications précédentes, **caractérisée en ce qu'**en section transversale, les barres transversales (39 sont réalisées en forme de u et ouvertes vers le bas, et présentent une face de base (3a) et des faces latérales (3b) depuis lesquelles font saillie des brides de fixation (3c).

13. Plateforme de chargement selon l'une ou plusieurs des revendications précédentes, **caractérisée en ce que** dans la zone située directement derrière une cabine de conducteur (12) et dans la zone située un peu en avant du passage de roue arrière la plateforme de chargement présente des traverses (24).

14. Plateforme de chargement selon l'une ou plusieurs des revendications précédentes, **caractérisée en ce qu'**en section transversale, les traverses (24) sont réalisées en forme de u et ouvertes vers le haut et présentent une face de base (24a) ainsi que des faces latérales de traverse (24b).

15. Plateforme de chargement selon l'une ou plusieurs des revendications précédentes, **caractérisée en ce que** depuis des arêtes libres des parois latérales de traverse (24b) font saillie des brides (24c) qui sont reliées aux brides (3c) d'une barre transversale (3).

16. Plateforme de chargement selon l'une ou plusieurs des revendications précédentes, **caractérisée en ce que** le dispositif de déformation (30) s'étend, depuis la traverse (24) arrière en direction de roulement (4), en alignement par rapport au longeron (2).

17. Plateforme de chargement selon l'une ou plusieurs des revendications précédentes, **caractérisée en ce qu'**en section transversale, le dispositif de déformation (30) est réalisé en forme de caisson rectangulaire avec des faces latérales d'élévation (31) et des faces latérales transversales (32) verticales.

18. Plateforme de chargement selon l'une ou plusieurs des revendications précédentes, **caractérisée en ce que** le dispositif de déformation présente un segment en forme d'arc qui présente des moulures dans la zone des faces latérales d'élévation (31).

19. Plateforme de chargement selon l'une ou plusieurs des revendications précédentes, **caractérisée en ce que** le longeron (2) de la plateforme de chargement (1) présente des moulures (34) ou des tronçons de moulures (35) dans la zone entre les traverses (24).

20. Plateforme de chargement selon l'une ou plusieurs des revendications précédentes, **caractérisée en ce que** les tronçons de moulures (35) sont agencés dans un espace intermédiaire entre deux barres transversales (7).

21. Plateforme de chargement selon l'une ou plusieurs des revendications précédentes, **caractérisée en ce que** sur les faces supérieures (7) libres des barres transversales (3) est agencée une plaque de plateforme de chargement (40) qui est reliée avec la plateforme de chargement (1) de manière à pouvoir être détachée et séparée.

22. Plateforme de chargement selon l'une ou plusieurs des revendications précédentes, **caractérisée en ce que** le plateforme de chargement (1) prend appui en direction verticale sur des faces latérales (41) du véhicule automobile.

23. Plateforme de chargement selon l'une ou plusieurs des revendications précédentes, **caractérisée en ce que** pour soutenir verticalement la plateforme de chargement (1) se trouvent des éléments de soutien (42) qui soutiennent la plateforme de chargement (1) contre le plancher de véhicule (33).

24. Plateforme de chargement selon l'une ou plusieurs des revendications précédentes, **caractérisée en ce que** dans la zone des côtés longitudinaux du véhicule et/ou dans la zone de l'arrière du véhicule sont agencées des trappes et/ou des portes (43) qui permettent un accès au compartiment à marchandises (34).

25. Plateforme de chargement selon l'une ou plusieurs des revendications précédentes, **caractérisée en ce que** les trappes et/ou portes (43) sont réalisées verrouillables.

26. Véhicule automobile, en particulier petit camion, présentant la plateforme de chargement selon l'une ou plusieurs des revendications 1 à 25.

27. Véhicule automobile selon la revendication 26, **caractérisé en ce que** le véhicule automobile présente un compartiment à marchandises (34) au-dessous de la plateforme de chargement (1).

28. Véhicule automobile selon la revendication 26 et/ou 27, **caractérisé en ce que** le compartiment à marchandises (34) est accessible de manière à pouvoir être verrouillé au moyen de portes et/ou de trappes (43).

29. Véhicule automobile selon l'une des revendications 26 à 28, **caractérisé en ce que** des dispositifs en tiroir sont agencés dans le compartiment à marchandises (34) et montés de manière à pouvoir être sortis de celui-ci.
